# EUROPEAN PATENT SPECIFICATION

(11) **EP 2 514 988 B1**
(45) Date of publication and mention of the grant of the patent: **27.08.2014**
(21) Application number: 12177275.0
(22) Date of filing: 18.10.2002
(51) Int. Cl.: F16D 51/12, B66B 11/08, B66D 5/08, F16D 65/14, B66D 5/30, F16D 59/00

(54) **Brake mechanism for traction machine**
Bremsmechanismus für Zugmaschine
Mécanisme de frein pour machine à traction

(43) Date of publication of application: 24.10.2012
(62) Divisional of application: 02777879.4
(73) Proprietor: MITSUBISHI DENKI KABUSHIKI KAISHA, Chiyoda-ku, Tokyo 100-8310 (JP)
(72) Inventor: Maruyama, Naoyuki, Tokyo 100-8310 (JP); Sagawa, Hirofumi, Tokyo 100-8310 (JP)
(74) Representative: HOFFMANN EITLE

(56) References cited:
- JP-A- 11 351 269
- JP-A- 2001 056 035

## Description

### Technical Field

The present invention relates to a brake mechanism and, more particularly, to a brake mechanism which is suitably used in a traction machine for an elevator.

### Background Art

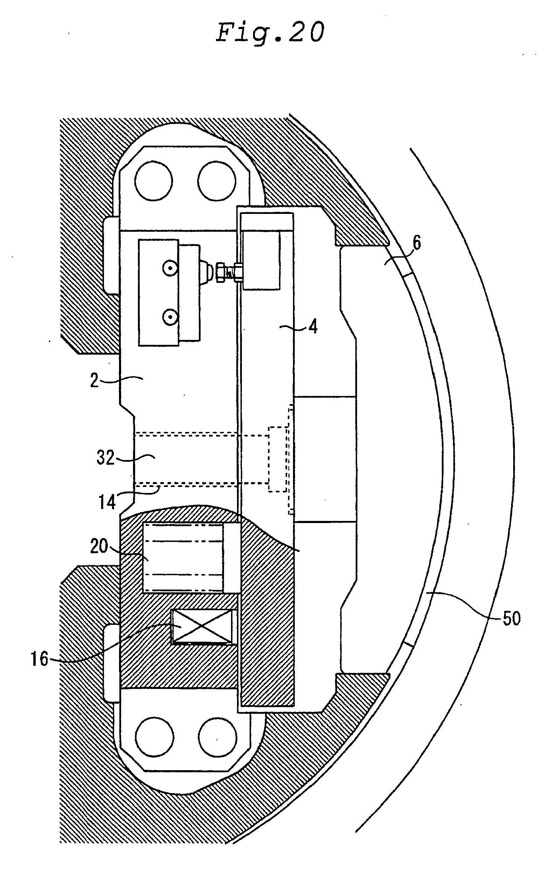

Figure 20 is a front view, partially cross sectioned, of a conventional brake mechanism for a traction machine. In Figure 20, hatched portions and a portion indicated by dotted lines represent cross sections.

As shown in Figure 20, the brake mechanism includes a fixed iron core 2, a movable iron core 4, and a shoe 6.

For the fixed iron core 2, a guide 14 is provided in the center of the fixed iron core 2. Also, the fixed iron core 2 is provided with a coil 16 and a pressing spring 20.

The movable iron core 4 is provided with a guide pin 32. The guide pin 32 penetrates the guide 14 in the fixed iron core 2, by which the movable iron core 4 is assembled to the fixed iron core 2 in a movable state.

On the opposite side to a surface on which the movable iron core 4 and the fixed iron core 2 face to each other, the movable iron core 4 is provided with the shoe 6.

In the brake mechanism constructed as described above, when a current flows in the coil 16 provided in the fixed iron core 2, the movable iron core 4 is attracted to the fixed iron core 2. At this time, the shoe 6 is pulled toward the fixed iron core 2 together with the movable iron core 4, and is separated from a brake surface 50. In this state, the traction machine is in a rotatable state, and the brake is in a released state.

On the other hand, when the current flowing in the coil 16 is cut off, an attraction force between the movable iron core 4 and the fixed iron core 2 decreases. When the decreased attraction force becomes larger than a force of the pressing spring 20 arranged in the fixed iron core 2, which force presses the movable iron core 4 on the shoe 6, the movable iron core 4 moves toward the brake surface 50 together with the shoe 6. Thereby, the shoe 6 is pressed on the brake surface 50, by which the brake of traction machine becomes in an applied state.

In the brake mechanism that operates in the above-described manner, the shoe 6 is pressed repeatedly on the brake surface 50. Therefore, the brake surface 50 may sometimes deflect. If the brake surface 50 deflects, the shoe 6 may sometimes rub the brake surface 50 even when the brake is released. Therefore, it can be thought that wear particles enter between the brake surface 50 and the shoe 6, which weakens the braking force of the brake.

JP 2001/56035 A discloses features falling under the preamble of claim 1.

### Disclosure of the Invention

In order to solve the problem in that the braking force of brake is weakened by a shoe rubbing a brake surface due to the deflection of the brake surface as described above, the present invention proposes an improved brake mechanism capable of securing the braking force of brake to some degree even if the brake surface deflects.

Thereupon, a brake mechanism for a traction machine in accordance with the present invention has the features of claim 1. Examples of the present invention are described by the claims dependent upon claim 1.

According to the invention, the brake mechanism side plate is provided to come into contact with one surface of the braking member and to be capable of adjusting a tilt; and the an elastic member is in contact with a surface opposed to the one surface and presses the braking member toward the side plate, so that
the braking member moves along the side plate when the movable member is attracted to the fixed member.

By this configuration, when the movable member and the fixed member are attracted to each other, attraction can be made while the distance between the fixed member or the movable member and the braking member is adjusted. Therefore, in the attracted state, the braking member and the undeflected original brake surface can be kept parallel with each other, so that the distance between the brake surface and the braking member can be shortened to some degree. Thereupon, the distance between the attraction surfaces of the movable iron core and the fixed iron core can be shortened, so that a high attraction force is not needed, and the brake mechanism can be made small in size.

### Brief Description of the Drawings

Figure 1 is a front view, partially cross sectioned, of a brake mechanism for a traction machine in accordance a first example.
Figure 2 is a sectional view of the brake mechanism taken along the line A-A' of Figure 1.
Figure 3 is a top view, partially cross sectioned, of the brake mechanism in accordance with the first example, illustrating a state in which the brake is applied.
Figure 4 is a top view, partially cross sectioned, of the brake mechanism in accordance with the first example, illustrating a state in which the brake is released.
Figure 5 is a top view, partially cross sectioned, of the brake mechanis in accordance with the first example, illustrating a state in which the brake is applied.
Figure 6 is a front view, partially cross sectioned, of a brake mechanism for a traction machine in accordance with the second example.
Figure 7 is a front view, partially cross sectioned, for illustrating a brake mechanism in the third example.
Figure 8 is a front view, partially cross sectioned, for illustrating a brake mechanism in the fourth example.
Figures 9 and 10 are top views for illustrating a state in which the brake of the brake mechanism in the fourth example is applied and released.
Figure 11 is a front view, partially cross sectioned, for illustrating a brake mechanism in the fifth example.
Figures 12 and 13 are top views, partially cross sectioned, for illustrating the brake mechanism in the first embodiment of the present invention. Figure 14 is a front view thereof.
Figure 15 is a front view, partially cross sectioned, for illustrating the brake mechanism in the sixth example.
Figure 16 is a front view, partially cross sectioned, for illustrating the brake mechanism in the seventh example.
Figure 17 is a front view, partially cross sectioned, for illustrating the brake mechanism in the eighth example.
Figure 18 is a front view, partially cross sectioned, for illustrating the brake mechanism in the ninth example.
Figure 19 is an enlarged sectional view of the gap adjusting bolt, Figures 19(a) and 19(b) show a case where the gap adjusting bolt in the first example, and Figures 19(c) and 19(d) show the gap adjusting bolt in the ninth example.
Figure 20 is a front view, partially cross-sectional, of a conventional brake mechanism for a traction machine.

### Best Mode for Carrying Out the Invention

An embodiment of the present invention will now be described with reference to the accompanying drawings. In the drawings the same reference numerals are applied to the same or equivalent elements, and the explanation of these elements is simplified or omitted.

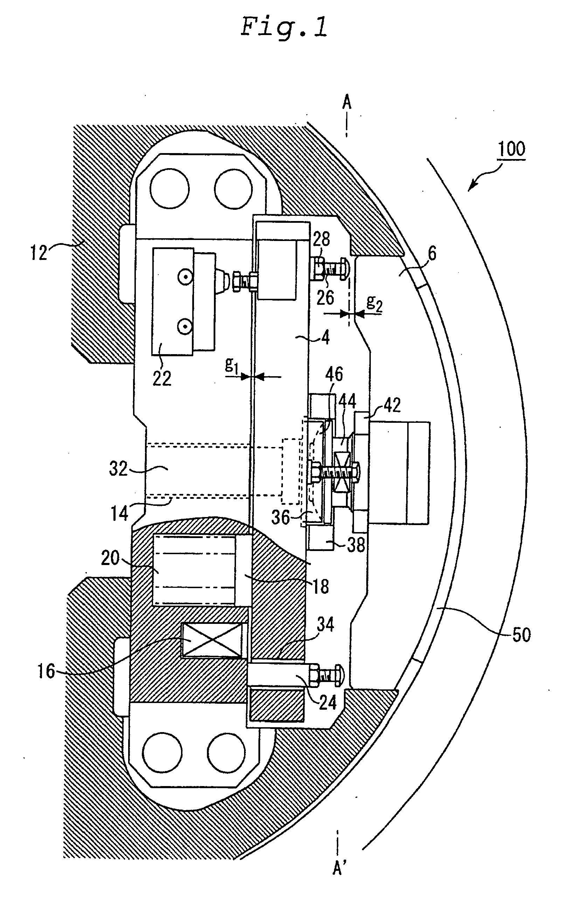

First, a first example will be described with reference to Figures 1 to 3.

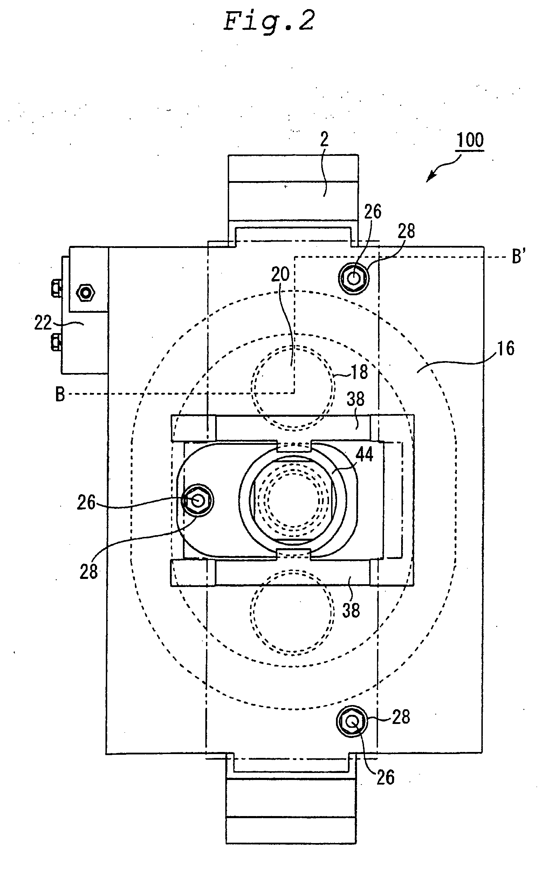

Figure 1 is a front view, partially cross sectioned, of a brake mechanism 100 for a traction machine in accordance with the first example. Also, Figure 2 is a sectional view of the brake mechanism 100 taken along the line A-A' of Figure 1.

The construction of the brake mechanism 100 will now be described with reference to Figures 1 and 2. In Figures 1 and 2, hatched portions and portions indicated by dotted lines represent cross sections. Also, Figure 1 mainly shows the front of a right-hand side portion of the brake mechanism 100, but actually, the brake mechanism 100 is symmetrical in the right-and-left direction.

As shown in Figures 1 and 2, the brake mechanism 100 includes a fixed iron core 2, a movable iron core 4, and a shoe 6.

The fixed iron core 2 is fixed to a support 12, by which the fixed iron core 2 is fixed to a traction machine body.

For the fixed iron core 2, a guide 14 is provided in the center thereof. As shown in Figure 2, a coil 16 is arranged with the guide 14 being its center so as to draw a circle on a plane perpendicular to the paper of Figure 1. Also, spring receiving members 18 are provided on the inside of the coil 16 and above and below the guide 14, and each of the spring receiving members 18 is fitted with a pressing spring 20. Further, a detection switch 22 is provided at the upper part of the fixed iron core 2 in a form such as to protrude to the front side (left-hand side in Figure 2) of the fixed iron core 2. Also, three attachment members 24 are provided on a surface of the fixed iron core 2 on which the fixed iron core 2 faces to the movable iron core 4. The center of gravity of a triangle connecting these three attachment members 24 agrees with the center of the guide 14, and further agrees with the center of gravity of the fixed iron core 2. Also, three tilt adjusting bolts 26 each are fixed to the attachment member 24 with a locknut 28. The tip end portion of the tilt adjusting bolt 26 is treated into a spherical surface. Also, the three tilt adjusting bolts 26 are adjusted so that the movable iron core 4 and the shoe 6 are parallel with each other at the time of excited state.

In the center of the movable iron core 4, a guide pin 32 is provided. The guide pin 32 protrudes toward the fixed iron core 2. The protruding portion of the guide pin 32 penetrates the guide 14 in the fixed iron core 2, by which the fixed iron core 2 and the movable iron core 4 are assembled to each other in a movable state. The movable iron core 4 is provided with a through hole 34 at three locations. The locations at which the three through holes 34 are provided correspond to the positions of the attachment members 24 of the fixed iron core 2, and the attachment member 24 provided on the fixed iron core 2 penetrates the through hole 34. The center of gravity of a triangle connecting these three through holes 34 agrees with the center of the guide pin 32, and further agrees with the center of gravity of the movable iron core 4.

In the center of a surface of the movable iron core 4 which oppose to the surface on which the movable iron core 4 faces to the fixed iron core 2, a spherical seat receiving member 36 is provided. Also, a plate spring 38 is arranged so as to surround the spherical seat receiving member 36.

On the surface of the shoe 6 on which the shoe 6 faces to the movable iron core 4, a gap adjusting bolt 44 is provided via a locknut 42. At the tip end of the gap adjusting bolt 44, a spherical seat 46 is provided. The spherical seat 46 is arranged so as to come into contact with the spherical seat receiving member 36 of the movable iron core 4. The tip end of the gap adjusting bolt 44 is supported by the plate spring 38, and the gap adjusting bolt 44 is installed so that the spherical seat 46 can slide on the surface of the spherical seat receiving member 36. Therefore, the gap adjusting bolt 44 is connected to the movable iron core 4 in a state of being capable of moving slightly.

The surface of the shoe 6 on the opposite side to the surface on which the shoe 6 faces to the movable iron core 4 faces to the brake surface 50.

The surfaces on which the movable iron core 4 and the fixed iron core 2 face to each other are surfaces that are attracted to each other or separated from each other when the brake is released or applied. These two opposed surfaces are referred to as attraction surfaces in this description. These attraction surfaces are arranged so that a distance g1 is maintained in a braking state in which the brake is applied.

Also, in the first example, the tip end of the tilt adjusting bolt 26 and the opposed surface of the shoe 6 are arranged so that a distance g2 is maintained in a state in which the brake is applied. The distance g2 is slightly smaller than the distance g1.

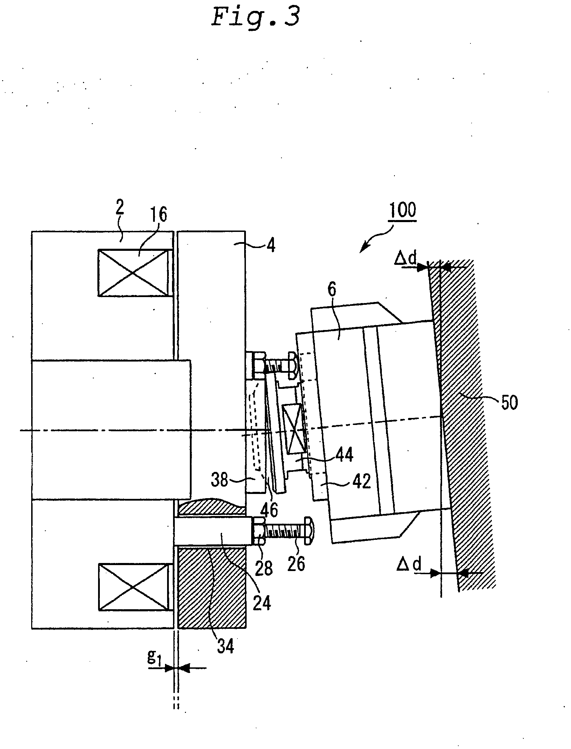

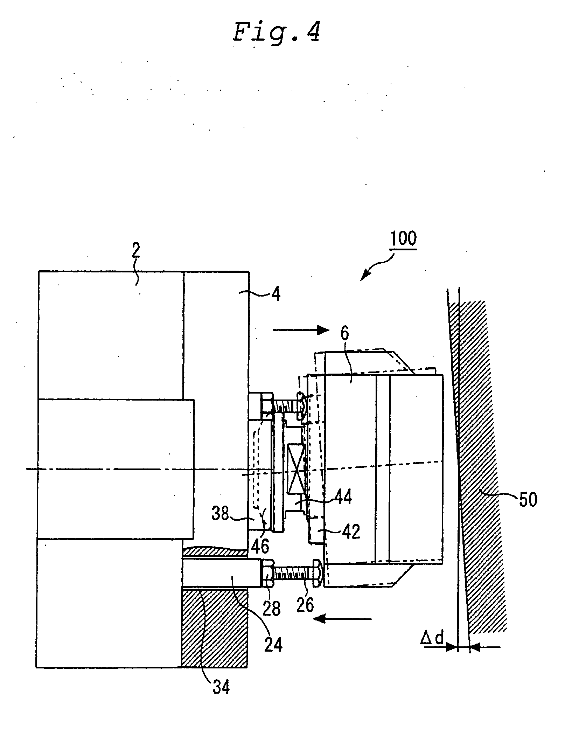

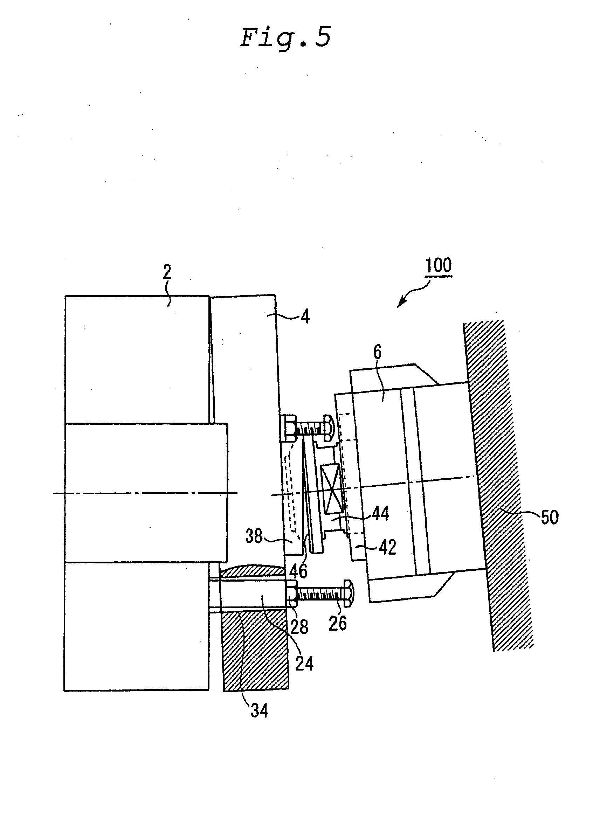

Figure 3 is a top view, partially cross sectioned, of the brake mechanism 100, illustrating a state in which the brake is applied, and Figure 4 is a top view, partially cross sectioned, of the brake mechanism 100, illustrating a state in which the brake is released. Also, Figure 5 is a top view, partially cross sectioned, of the brake mechanism 100, illustrating a state in which the brake is applied. In Figures 3, 4 and 5, hatched portions and portions indicated by dotted lines represent cross sections.

Next, the operation of the brake mechanism 100 in accordance with the first example at the time when the brake is applied and released will be described with reference to Figures 1 to 5.

When the current flowing in the coil 16 is cut off, no attraction force acts between the movable iron core 4 and the fixed iron core 2. In this state, only a force of the spring 20 pushing the movable iron core 4 toward the brake surface 50 acts on the movable iron core 4. Therefore, the shoe 6 is pressed on the brake surface 50 along with the movement of the movable iron core 4, by which the brake is applied. In this description, this state is referred to as an unexcited state. As described above, in the unexcited state, the distance between the attraction surfaces of the fixed iron core 2 and the attraction surface of the movable iron core 4 is g1, and the distance between the tip end of the tilt adjusting bolt 26 and the opposed surface of the shoe 6 is g2.

On the other hand, when a current flows in the coil 16, an attraction force acts between the movable iron core 4 and the fixed iron core 2. When this attraction force becomes higher than the force of the spring 20 pressing the movable iron core 4 toward the brake surface 50, the movable iron core 4 is pulled toward the fixed iron core 2, and subsequently the movable iron core 4 and the fixed iron core 2 become in an attracted state. At this time, the shoe 6 is separated from the brake surface 50 together with the movable iron core 4, by which the brake is released. In this description, this state is referred to as an excited state.

When the current flowing in the coil 16 is again cut off from the excited state, the attraction force between the movable iron core 4 and the fixed iron core 2 is released. When the force of the spring 20 pressing the movable iron core 4 becomes higher than the attraction force between the movable iron core 4 and the fixed iron core 2, the movable iron core 4 is pushed toward the brake surface 50. As a result, the shoe 6 is pressed on the brake surface 50, by which the brake is applied, and the state returns again to the unexcited state.

Thus, by controlling the current flowing in the coil 16, the brake of the brake mechanism 100 can be applied or released.

When the movable iron core is attracted to the fixed iron core 2 or pressed toward the brake surface, the attraction surfaces on which the movable iron core 4 and the fixed iron core 2 face to each other can be operated in a substantially parallel state by the guide pin 32 provided on the movable iron core 4 and the guide 14 provided in the fixed iron core 2.

When the brake surface 50 does not deflect, the shoe 6 moves together with the movable iron core 4 in a state in which the gap adjusting bolt 44 provided on the shoe 6 is perpendicular to the brake surface 50, that is, in a state in which the shoe 6 and the opposed surface of the movable iron core 4 are parallel with each other.

On the other hand, when the brake surface 50 deflects, in the unexcited state, the surface facing to the brake surface 50 of the shoe 6 is pressed on the brake surface 50 in a parallel state. The movement of the brake mechanism 100 in such a case is explained by taking a state in which the brake surface 50 is open by Δd to the front side (lower side in Figures 3 and 4) with respect to the original position as shown in Figures 3 and 4 as an example.

In the unexcited state, the shoe 6 is pressed on the brake surface 50 in a parallel state. At this time, the spherical seat 46 at the tip end of the gap adjusting bolt 44 slides on the spherical seat receiving member 36 and shifts so as to open, by which the tilt of the shoe 6 is adjusted in response to the deflection of the brake surface 50 so that the whole surface of the shoe 6 comes into contact with the brake surface 50.

Next, a case where the state transfers from the unexcited state to the excited state will be explained.

At the time of unexcited state, the distance between the attraction surfaces of the movable iron core 4 and the fixed iron core 2 is g1, that is, in this state, the attraction surfaces are in a state of being separated farthest. Therefore, at this time, the shoe 6 is in a state of being separated farthest from the tip end of the tilt adjusting bolt 26.

When the brake surface 50 deflects so as to open by Δd to the front side, the distance between the tip ends of the two tilt adjusting bolts 26 provided on the back side and the shoe 6 is smaller than the distance between the tip end of the tilt adjusting bolt 26 provided on the front side and the shoe 6. Therefore, when a current begins to flow in the coil 16 and the distance between the movable iron core 4 and the fixed iron core 2 decreases, the shoe 6 is first pressed on the tilt adjusting bolts 26 provided on the back side. Thereby, the shoe 6 is attracted toward the fixed iron core 2, and at the same time, inversely receives a force of pressing toward the brake surface 50 from the tilt adjusting bolts 26 on the back side. Therefore, the back-side portion of the shoe 6 does not move toward the fixed iron core 2, and the front-side portion in which the distance between the tilt adjusting bolt 26 and the shoe 6 is small is attracted toward the fixed iron core 2. At this time, the spherical seat 46 adjusts the tilt while rotating so as to slide on the spherical seat receiving member 36.

As described above, in the state in which the shoe 6 is parallel with the surface of the movable iron core 4, the distance g₂ between the tip end of the tilt adjusting bolt 26 and the opposed shoe 6 is slightly smaller than the distance g₁. Therefore, when the movable iron core 4 is completely attracted to the fixed iron core 2, all of the tilt adjusting bolts 26 and the shoe 6 are brought into contact with each other, and the state is returned to the parallel state.

At the time of excited state, the tilt adjusting bolt 26 can be adjusted so that the movable iron core 4 and the shoe 6 are parallel with each other. Therefore, even when the movable iron core 4 is not parallel with the fixed iron core 2 as shown in Figure 5, in the excited state, adjustment is made by the tilt adjusting bolt 26 so that the distance from the surface of the fixed iron core 2 is constant. Therefore, the state can be returned to the excited state so that the distance from the shoe 6 to the brake surface 50 is kept parallel.

As described above, according to the brake mechanism 100, even when the brake surface 50 deflects, the whole surface of the shoe 6 can be pressed on the brake surface 50. Therefore, the braking force of brake can be maintained regardless of the deflection of the brake surface 50.

When the state transfers from the unexcited state to the excited state, the movable iron core 4 and the fixed iron core 2 can be attracted while the state is returned, by the tilt adjusting bolt 26, to a state in which the gap adjusting bolt 44 and the movable iron core 4 are perpendicular to each other, that is, a state in which the shoe 6 and the movable iron core 4 are parallel with each other. Therefore, the state of the brake surface 50 and the opposed surface of the shoe 6 can be returned to the parallel state.

For example, when the shoe 6 is attracted in a tilted state, considering a portion in which the distance between the shoe 6 and the brake surface 50 is shortest and a portion in which the distance between the shoe 6 and the brake surface 50 is shortened by the deflection of the brake surface 50, the distance between the brake surface 50 and the shoe 6 must have a margin to prevent collision of the shoe 6 with the brake surface 50 even when the brake surface 50 rotates. Therefore, in order to maintain the braking force of brake in a state in which the shoe 6 does not rub the brake surface 50, a large system is needed. However, according to this brake mechanism 100, since attraction can be made in the state in which the brake surface 50 and the shoe 6 are parallel with each other, the distance between the brake surface 50 and the shoe 6 has only to be set with a margin corresponding to the deflection without considering the tilt of the shoe 6. Therefore, the brake mechanism can be made small in size.

In this example, explanation has been given of the case where the brake surface 50 opens to the front side with respect to its original position. However, the present disclosure is not limited to this case. Even in a case where the brake surface 50 tilts in another direction, the tilt can be adjusted by the three tilt adjusting bolts 26.

In the first example, three tilt adjusting bolts are provided. The reason for this is that if at least three tilt adjusting bolts are provided, a plane is determined, so that a tilt can be adjusted. In the present invention, however, the number of tilt adjusting bolts is not limited to three, and three or more tilt adjusting bolts may be provided.

In the first example, adjustment is made by the tilt adjusting bolts 26 so that the movable iron core 4 and the shoe 6 are parallel with each other at the time of excited state, and the center of gravity of a triangle connecting the tilt adjusting bolts 26 agrees with the center of the gap adjusting bolt 44. The reason for this is that the shoe 6 and the undeflected original brake surface 50 are made parallel with each other by keeping the distance between the fixed iron core 2 and the shoe 6 constant. However, the present invention is not limited to this configuration. For example, in the case where the construction is not such that the fixed iron core 2 and the shoe 6 are made parallel with each other, it is necessary only that the lengths of the tilt adjusting bolts 26 be adjusted and the center of gravity be set according to that angle.

In the first example, explanation has been given of the case where both of the tilt adjusting bolts 26 and the gap adjusting bolt 44 are provided. However, the present disclosure is not limited to this case, and only the gap adjusting bolt 44 may be provided. Even if only the gap adjusting bolt 44 is provided, at least when the shoe 6 is pressed on the brake surface 50, the whole surface of the shoe 6 can come into contact with the brake surface 50, so that the braking force of the brake mechanism 100 can be maintained.

In the first example, the tip end of the tilt adjusting bolt is formed into a spherical surface. By doing this, the tilt adjusting bolt comes into contact with the shoe at one point, so that the tilt of shoe can be adjusted more smoothly. However, the present disclosure is not limited to this configuration. The tip end may be of a plane shape, a sharp shape, or other shapes.

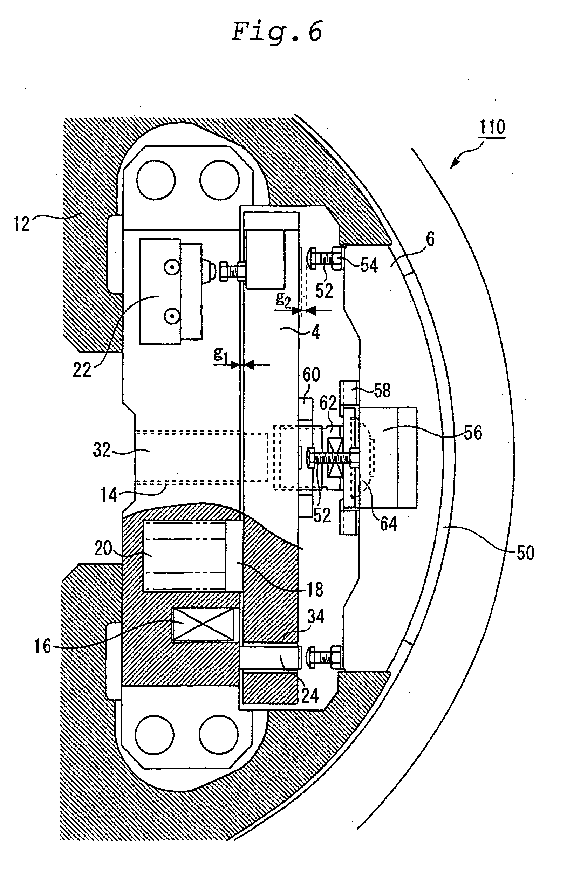

Next, a second example will be described with reference to Figure 6.

Figure 6 is a front view, partially cross sectioned, of a brake mechanism 110 for a traction machine in accordance with the second example. In Figure 6, hatched portions and a portion indicated by dotted lines represent cross sections. Also, Figure 6 shows, like Figure 1, a right-hand side portion of the brake mechanism 110, but the actual brake mechanism 110 is symmetrical in the right-and-left direction when viewed from the front.

The brake mechanism 110 is similar to the brake mechanism 100 in the first example. However, in the brake mechanism 110, the fixed iron core 2 is provided with the attachment members 24 only, and is not provided with the tilt adjusting bolts 26 and the locknuts 28.

On the other hand, in the brake mechanism 110, the shoe 6 is provided with a tilt adjusting bolt 52 at three locations via a locknut 54. The center of gravity of a triangle connecting these three tilt adjusting bolts 52 agrees with the center of gravity of the shoe 6. Also, each of the tilt adjusting bolts 52 is provided at a position facing to the attachment member 24. The tip end of the tilt adjusting bolt 52 is machined into a spherical surface.

As in the first example, the distance g2 between the tip end of the tilt adjusting bolt 52 and the opposed surface of the attachment member 24 is slightly smaller than the distance g1 between the attraction surfaces of the movable iron core 4 and the fixed iron core 2 in the unexcited state.

In the brake mechanism 110, contrary to the brake mechanism 100, the shoe 6 is provided with a spherical seat receiving member 56 and a plate spring 58, and the fixed iron core 4 is provided with a gap adjusting bolt 62 via a locknut 60. Also, a spherical seat 64 is provided at the tip end of the gap adjusting bolt 62. The center of the gap adjusting bolt 62 agrees with the center of gravity of the shoe 6.

The following is a description of a case where the brake of the brake mechanism 110 constructed as described above is applied and released.

As in the case of the brake mechanism 100, in the brake mechanism 110 as well, the brake can be applied or released by controlling the current flowing in the coil 16. At this time, if the brake surface 50 does not deflect, the movable iron core 4 and the shoe 6 are pressed on the brake surface 50 or pulled toward the fixed iron core 2 while keeping a fixed space. Specifically, in the state in which the brake surface 50 does not deflect, the movable iron core 4 and the shoe 6 move in the direction perpendicular to the gap adjusting bolt 54 and the guide pin 32.

On the other hand, if the brake surface 50 deflects, in the unexcited state, as in the case of the brake mechanism 100 in the first embodiment, a shift is adjusted by sliding the spherical seat 64 on the spherical seat receiving member 56 so that the whole surface of the shoe 6 comes into contact with the deflected brake surface 50.

When a current flows and the attraction of the movable iron core 4 is started, of the three tilt adjusting bolts 52 provided on the shoe 6, a portion in which the distance between the tilt adjusting bolt 52 and the attachment member 24 is shortest begins to come into contact with the attachment member 24. Therefore, the shoe 6 is pushed back in the reverse direction to the attraction direction by the attachment member 24 in this portion, and the state becomes the excited state while the position is corrected. Thus, in the excited state, the fixed iron core 2 and the movable iron core 4 and the surface opposed to the movable iron core 4 of the shoe 6 can be returned to horizontal. Also, in this state, the undeflected original brake surface 50 and the surface of the shoe 6, opposed to the brake surface 50, are kept parallel with each other.

Other portions are the same as portions in the first example, so that the explanation thereof is omitted.

As described above, in the brake mechanism 110, the shoe 6 is provided with the tilt adjusting bolts 52, the spherical seat receiving member 56, and the like, and the movable iron core 4 is provided with the gap adjusting bolt 62 and the like. In this configuration as well, as in the first example, even when the brake surface 50 deflects, the whole surface of the shoe 6 can come into contact with the brake surface 50 in the unexcited state, so that the braking force of the brake mechanism 110 can be maintained. Also, in the excited state, the shoe 6 can be returned to a normal position parallel with the brake surface 50. Therefore, the distance between the brake surface 50 and the shoe 6 can be shortened as compared with the case where the shoe 6 is attracted in a tilted state. For this reason, the brake mechanism 110 can be made small, so that the whole of the traction machine can be small in size.

In the second example, the shoe 6 is provided with the tilt adjusting bolts 52, the spherical seat receiving member 56, and the like, and the movable iron core 4 is provided with the gap adjusting bolt 62 and the like. However, the present disclosure is not limited to this configuration. For example, the tilt adjusting bolts 52 and the like are provided on the shoe 6, and the spherical seat receiving member 56 may, as in the case of the brake mechanism 100, be provided on the movable iron core 4. Also, for example, only the gap adjusting bolt 62 and the like may be provided without the provision of the tilt adjusting bolts 52.

As explained in the first example, in the present disclosure, the number of tilt adjusting bolts 52 is not limited to three, and also the lengths of all of the tilt adjusting bolts 52 are not limited to equal lengths.

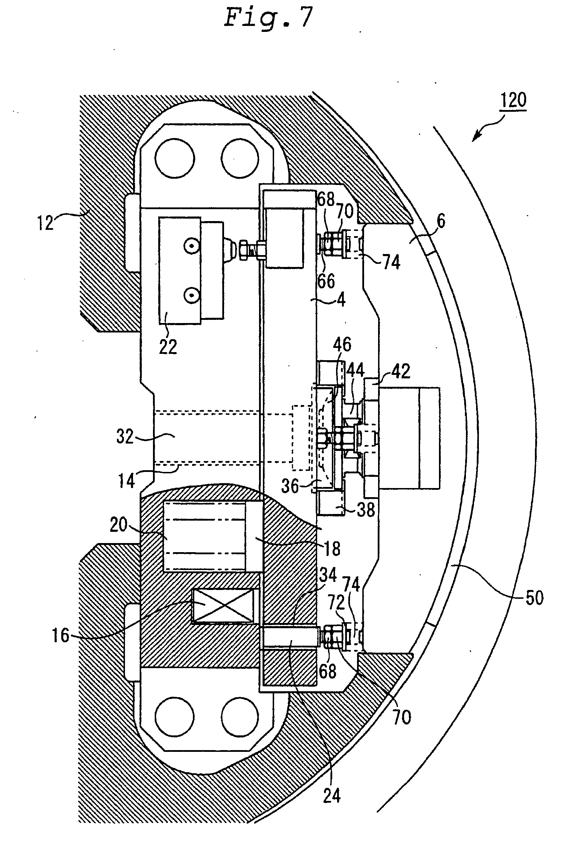

Next, a third example will be described with reference to Figure 7.

Figure 7 is a front view, partially cross sectioned, for illustrating a brake mechanism 120 in the third example. In Figure 7, hatched portions and a portion indicated by dotted lines represent cross sections. Also, Figure 7 shows, like Figure 1, a right-hand side portion of the brake mechanism 120, but the actual brake mechanism 120 is symmetrical in the right-and-left direction when viewed from the front.

As shown in Figure 7, the brake mechanism 120 is similar to the brake mechanism 100 in the first example.

However, in the brake mechanism 120, the attachment member 24 mounted on the fixed iron core 2 is provided with a screw portion 66 in place of the tilt adjusting bolt 26 and the locknut 28. Also, the screw portion 66 is provided with a locknut 68, and further, a nut 70, a spring receiving member 72, and a small spring 74 are assembled in that order. The small spring 74 is in contact with the shoe 6.

In the excited state, for the small springs 74, the angular moments around the spherical seat 46 caused by the small springs 74 are set so that f1 * R1 = f2 * R2 = f3 * R3, and the attraction force of the plate spring 38 is set so that F > f1 + f2 + f3. Here, f1, f2 and f3 each are a pressing force of the small spring 74 acting in the direction such that the shoe 6 is pressed on the brake surface 50, R₁, R₂ and R₃ each are a distance between the center of the spherical seat 46 and the center of the small spring 74, and F is an attraction force of the plate spring 38 between the movable iron core 4 and the shoe 6.

In the brake mechanism 120 constructed as described as well, as in the case of the brake mechanism 100, in the unexcited state, by sliding the spherical seat 46 on the spherical seat receiving member 36, the angle of the shoe 6 is adjusted so that the shoe 6 comes into contact with the brake surface 50, by which the shoe 6 is pressed on the brake surface 50.

At the time of excited state as well, as in the case of the brake mechanism 100, by the attachment member 24 and the screw portion 66, the locknut 68, and the small spring 74, etc. provided on the attachment member 24, a portion in which the distance between the shoe 6 and the movable iron core 4 is short is pushed in the reverse direction to the attraction direction. Thereby, the shoe 6 is attracted while the tilt thereof is adjusted so that the surface opposed to the movable iron core 4 of the shoe 6 becomes parallel with the movable iron core 4.

In the brake mechanism 120, unlike the brake mechanism 100, the small spring 74 is provided in a portion in which the tilt at the time of attraction is adjusted. In the unexcited state, that is, at the time of brake application, since the shoe 6 is tilted so as to be parallel with the brake surface 50, the angular moments f₁ × R₁, f₂ × R₂, and f₃ × R₃ around the spherical seat 46 caused by the small springs 74 take different values.

On the other hand, in the excited state, that is, at the time of brake release, the fixed iron core 2 and the movable iron core 4 are attracted to each other in a contacting state. In the excited state, the angular moment around the spherical seat 46 caused by the small springs 74 is set so that f1 * R1 = f2 * R2 = f3 * R3, and further the attraction force of the plate spring 38 is selected so that F > f1 + f2 + f3. Therefore, in the excited state as well, the shoe 6 does not separate from the movable iron core 4 and is always adjusted compulsorily in the direction such that the angular moment due to the tilt of the shoe 6 is balanced by the small spring 74, so that the shoe 6 can be kept parallel with the brake surface 50.

In this example, as means for adjusting the tilt of the shoe 6, the screw portion 66, the locknut 68, the nut 70, the spring receiving member 72, and the small spring 74 are installed to the movable iron core 4 in that order. However, in the present disclosure, the means for adjusting the tilt is not limited to these elements. Any other elastic body may be used if it can keep the angular moment around the spherical seat at a predetermined value in the excited state. Further, as in the second example, these elements may be provided on the shoe 6. In the third example, the screw portion 66 and the like are provided at three locations, but, as in the first example, the number of locations is not limited to three.

In this example, the angular moments around the spherical seat 46 caused by the small springs 74 are made constant at the time of parallel state. However, the present disclosure is not limited to this configuration. In the case where the construction is not such that the fixed iron core 2 and the shoe 6 are kept parallel with each other, the small spring 74 has only to be set so that the angular moments are constant when a predetermined angle is attained.

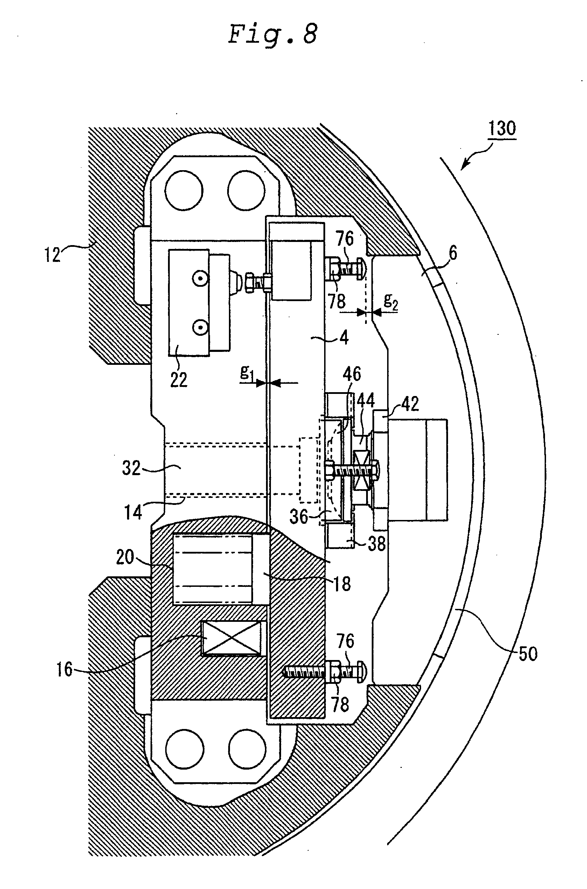

Next, a fourth example will be described with reference to Figure 8.

Figure 8 is a front view, partially cross sectioned, for illustrating a brake mechanism 130 in the fourth example. In Figure 8, hatched portions and dotted lines represent cross sections. Also, Figure 8 shows, like Figure 1, a right-hand side portion of the brake mechanism 130, but the actual brake mechanism 130 is symmetrical in the right-and-left direction when viewed from the front.

As shown in Figure 8, the brake mechanism 130 is similar to the brake mechanism 100 in the first example. However, for the brake mechanism 130, the fixed iron core 2 is not provided with the attachment members 24, the tilt adjusting bolts 26, and the locknuts 28, and the movable iron core 4 is not provided with the through holes 34 corresponding to these elements.

On the other hand, in the brake mechanism 130, three tilt adjusting bolts 76 are embedded in the movable iron core 4, and they each are fixed by a locknut 78. The center of gravity of a triangle connecting the three tilt adjusting bolts agrees with the center of the spherical seat 46. Also, the three tilt adjusting bolts 76 are adjusted so that the movable iron core 4 and the shoe 6 are parallel with each other at the time of excited state. Further, in the unexcited state and in the state in which the movable iron core 4 and the fixed iron core 2 are kept parallel with each other, the distance between the tip end of the tilt adjusting bolt 76 and the shoe 6 is kept at g2. The distance g2 is, as in the first embodiment, slightly smaller than the distance g1 between the attraction surfaces of the movable iron core 4 and the fixed iron core 2.

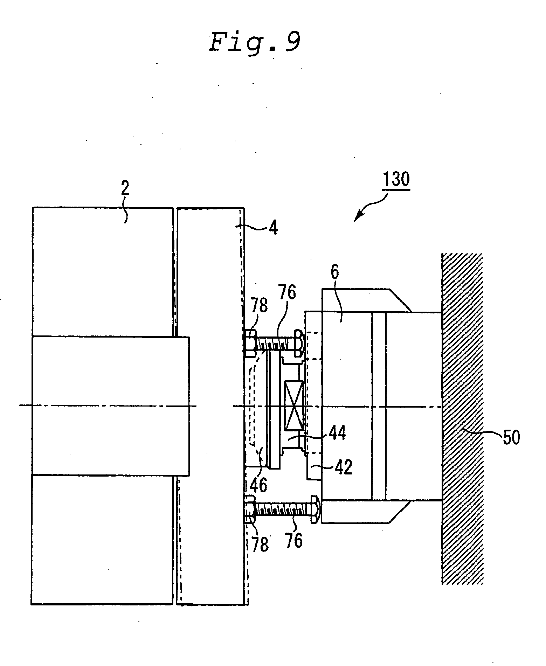

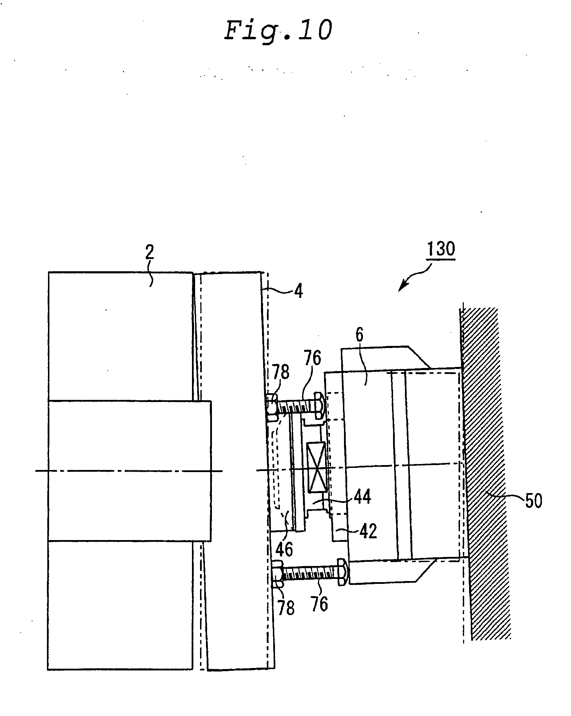

Figures 9 and 10 are top views for illustrating a state in which the brake of the brake mechanism 130 is applied and released. These top views are, like Figures 3 and 4, views taken along the line B-B' of Figure 2. Therefore, the lower portion in the figure shows the front side in Figure 8.

The movement of the brake mechanism 130 at the time when the state turns from the excited state to the unexcited state in the case where the movable iron core 4 tilts with respect to the fixed iron core 2 will be explained with reference to Figures 9 and 10.

When the movable iron core 4 tilts, of the tilt adjusting bolts 76 provided on the movable iron core 4, at least one bolt comes into contact with the shoe 6 earlier than other tilt adjusting bolts 76. When the state turns to the unexcited state, the movable iron core 4 receives a pressing force in the direction of the core 6 from the pressing spring 20. On the other hand, in a portion in which the distance between the movable iron core 4 and the shoe 6 is short and the tilt adjusting bolt 76 comes into contact with the shoe 6, the movable iron core 4 inversely receives a pressing force toward the fixed iron core 2. Thus, adjustment is made while the spherical seat 46 slides on the spherical seat receiving member 36 so that the shoe 6 and the movable iron core 4 become parallel with each other, by which the state is turned to the excited state.

Therefore, when the brake surface 50 does not deflect, the fixed iron core 2 and the movable iron core 4 can be made parallel with each other by making the shoe 6 and the movable iron core 4 parallel with each other.

On the other hand, when the brake surface 50 deflects as well, in a portion in which the distance between the movable iron core 4 and the shoe 6 is short, the tilt adjusting bolt 76 is pressed on the shoe 6. Thereby, the tilt of the movable iron core 4 is adjusted so that the shoe 6 and the movable iron core 4 are parallel with each other. As a result, in the unexcited state, the movable iron core 4 and the shoe 6 can be kept parallel with each other. Also, when the state turns from the unexcited state to the excited state as well, attraction is made in a state in which the movable iron core 4 and the shoe 6 are parallel with each other. Also, in the excited state, the fixed iron core 2 and the movable iron core 4 are attracted to each other in a state in which they are in contact with each other on the attraction surfaces. Therefore, an intrinsic state in which the fixed iron core 2 and the movable iron core 4 are parallel with each other and the surface opposed to the movable iron core 4 of the shoe 6 is also parallel with these iron cores is established. Thus, according to the brake mechanism 130, even in the excited state, the shoe 60 can be kept parallel with the undeflected original brake surface 50.

As described above, according to the brake mechanism 130, since the whole surface of the shoe 6 can be pressed on the brake surface 50 in the unexcited state, the brake strength can be secured. Also, in the excited state, the opposed surface of the shoe 6 can be kept parallel with the undeflected original brake surface 50, so that the system can be made small in size.

In the fourth example, explanation has been given of the case where the tilt adjusting bolts 76 and the like are disposed on the movable iron core 4. However, the present disclosure is not limited to this case, and the tilt adjusting bolts may be disposed on the shoe 6.

As explained in the first to third examples, tilt adjusting means such as a tilt adjusting bolt 26 such that a through hole 34 is provided in the movable iron core 4 and an attachment member 24 penetrating the through hole 34 is provided to attract the shoe 6 and the fixed iron core 2 in parallel may be provided separately.

In The fourth example, explanation has been given of the case where three tilt adjusting bolts 76 and the like are provided. However, as in the first to third examples, in the present disclosure, the number of tilt adjusting bolts 76 and the like is not limited to three.

In the fourth example, the three tilt adjusting bolts 76 have the same length, and the center of gravity of a triangle connecting the tilt adjusting bolts 76 agrees with the center of the gap adjusting bolt 44. The reason for this is that the shoe 6 and the undeflected original brake surface 50 are made parallel with each other in the excited state by keeping the distance between the movable iron core 4 and the shoe 6 constant. However, the present disclosure is not limited to this configuration. For example, in the case where the construction is not such that the movable iron core 4 and the shoe 6 are made parallel with each other, it is necessary only that the lengths of the tilt adjusting bolts 76 be adjusted and the center of gravity be set according to that angle.

Other portions are the same as portions in the first example, so that the explanation thereof is omitted.

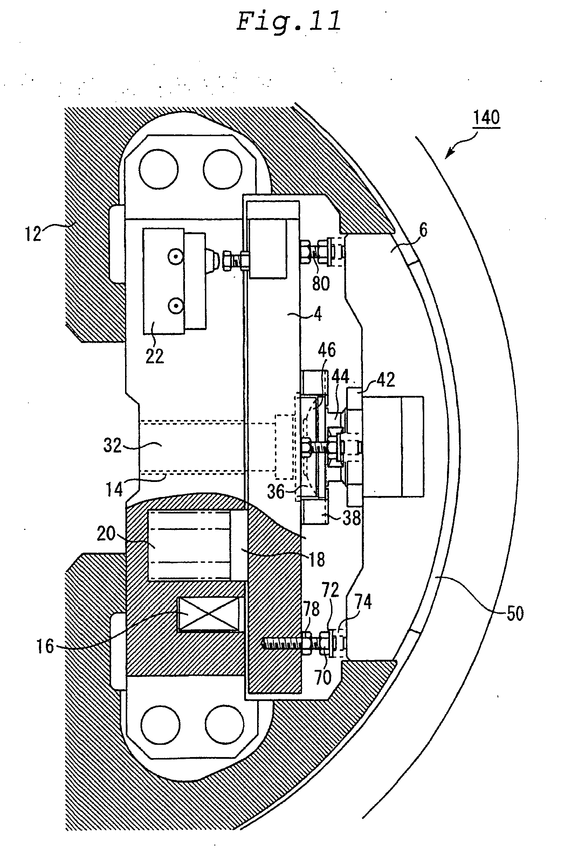

Next, a fifth example will be described with reference to Figure 11.

Figure 11 is a front view, partially cross sectioned, for illustrating a brake mechanism 140 in the fifth example. In Figure 11, hatched portions and dotted lines represent cross sections. Also, Figure 11 shows, like Figure 1, a right-hand side portion of the brake mechanism 140, but the actual brake mechanism 140 is symmetrical in the right-and-left direction when viewed from the front.

The brake mechanism 140 is similar to the brake mechanisms 120 and 130 explained in the third and fourth examples. The brake mechanism 140 is provided with screw portions 80 each fixed to the movable iron core 4 by a locknut 78. Also, as in the case of the brake mechanism 120, the nut 70, the spring receiving member 72, and the small spring 74 are provided in that order in the screw portion 80, and the small spring 74 is in contact with the shoe 6. That is to say, the brake mechanism 140 is a brake mechanism in which elements similar to the small spring 74 and the like provided in the brake mechanism 120 are installed to the brake mechanism 130.

When the movable iron core 4 and the surface opposed to the movable iron core 4 of the shoe 6 are parallel with each other, for example, in the unexcited state or in the excited state, for the small springs 74, the angular moments around the spherical seat caused by the small springs 74 are set so that f1 * R1 = f2 * R2 = f3 * R3. Also, in the excited state, the attraction force of the plate spring 38 is set so that F > f1 + f2 + f3. Here, f1, f2 and f3 each are a pressing force of the small spring 74 acting in the direction such that the shoe 6 is pressed on the brake surface 50, R1, R2 and R3 each are a distance between the center of the spherical seat 46 and the center of the small spring 74. Also, F is an attraction force of the plate spring 38 between the movable iron core 4 and the shoe 6.

In the brake mechanism 140, as in the case of the brake mechanism 130, even when the movable iron core 4 does not move in parallel with the fixed iron core 2, the shoe 6 and the movable iron core 4 can be kept parallel with each other.

Specifically, when the movable iron core 4 tilts, of the small springs 74 at the tip ends of the screw portions 80 provided on the movable iron core 4, at least one small spring comes into contact with the shoe 6 earlier than other small springs 74. When the state turns to the unexcited state, the movable iron core 4 receives a pressing force in the direction of the core 6 from the pressing spring 20. On the other hand, in a portion in which the distance between the movable iron core 4 and the shoe 6 is short and the small spring 74 comes first into contact with the shoe 6, the movable iron core 4 inversely receives a pressing force toward the fixed iron core 2. Therefore, adjustment is made while the spherical seat 46 slides on the spherical seat receiving member 36 so that the shoe 6 and the movable iron core 4 become parallel with each other, by which the state is turned to the unexcited state. When the state turns from the unexcited state to the excited state as well, as explained in the fourth example, attraction is made in a state in which the movable iron core 4 and the shoe 6 are parallel with each other. Finally, the fixed iron core 2 and the movable iron core 4 are attracted to each other, and the fixed iron core 2, the movable iron core 4, and the surface opposed to the movable iron core 4 of the shoe 6 become parallel with each other. Thus, even when the brake surface 50 deflects, the brake surface 50 and the shoe 6 can be kept parallel with each other.

The following is a description of the operation of the small springs 74 in the brake mechanism 140.

When the state transfers from the excited state to the unexcited state, if the movable iron core 4 tilts and the movable iron core 4 and the shoe 6 are not in a predetermined parallel state, the angular moments f1 * R1, f2 * R2, and f3 ; * R3 around the spherical seat caused by the small springs 74 take different values. On the other hand, in the parallel state, the angular moments are set so that f1 * R1 = f2 * R2 = f3 * R3. Specifically, the shoe 6 and the movable iron core 4 are always forced in the direction such that the angular moments are balanced, so that the shoe 6 and the brake surface 50 can be made parallel with each other.

Therefore, in the excited state as well, the shoe 6 does not separate from the movable iron core 4 and is always adjusted compulsorily in the direction such that the angular moments due to the tilt of the shoe 6 are balanced by the small spring 74, so that the shoe 6 can be kept parallel with the brake surface 50.

In this embodiment, the screw portion 80, the locknut 78, the nut 70, the spring receiving member 72, and the small spring 74 are installed to the movable iron core 4 in that order to adjust a tilt. However, as in the second example, these elements may be provided on the shoe 6. Also, as in the third example, the present invention is not limited to a configuration in which the small spring is installed. In place of the small spring 74, any other elastic body may be used if it can keep the angular moment at a predetermined value. Also, the angular moments caused by the small springs 74 are not limited to ones that are made constant when the movable iron core 4 and the shoe 6 are parallel with each other, and may be ones that are set so as to be constant when the movable iron core 4 and the shoe 6 have a predetermined angle.

Other portions are the same as portions in the first to fourth examples, so that the explanation thereof is omitted.

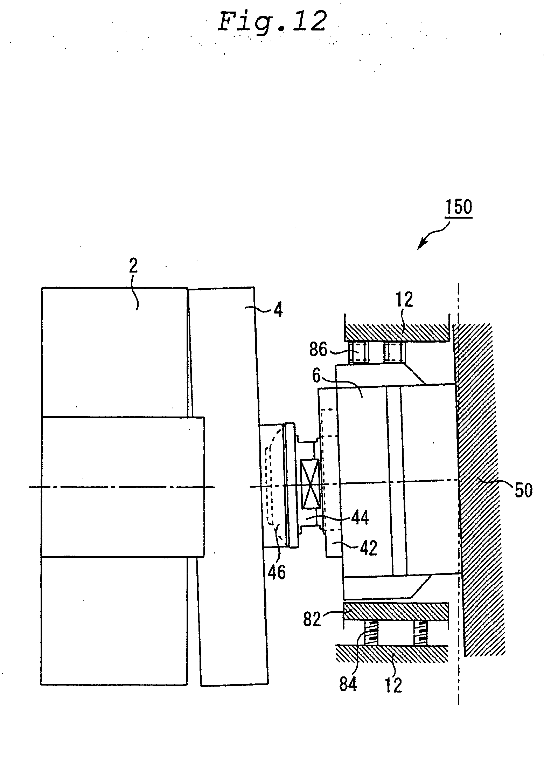

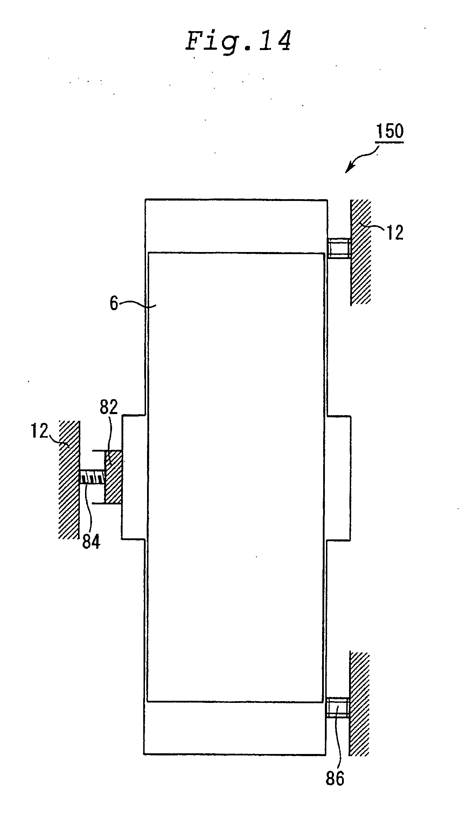

Next, a brake mechanism 150 in a first embodiment of the present invention will be described with reference to Figures 12 to 14.

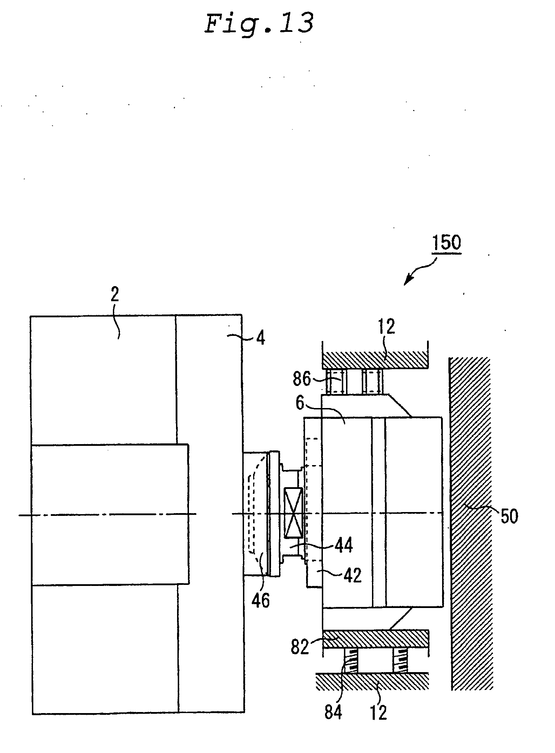

Figures 12 and 13 are top views, partially cross sectioned, for illustrating the brake mechanism 150 in the first embodiment of the present invention. Figures 12 and 13 show top surfaces corresponding to a portion viewed along the line B-B' of Figure 2. Also, in Figures 12 and 13, hatched portions and dotted lines represent cross sections.

As shown in Figure 12, the brake mechanism 150 is similar to the brake mechanism 100. However, the fixed iron core 2 of the brake mechanism 150 is not provided with the attachment members 24, the tilt adjusting screws 26, and the locknuts 28, and also the movable iron core 4 is not provided with the through holes 34 corresponding to these elements.

On the other hand, in the brake mechanism 150, a side plate 82 is fixed, with adjusting screws 84, to a support plate 12 arranged on the front side (lower side in Figure 12) so as to face to the shoe 6. The position and tilt of the side plate 82 can be adjusted by the adjusting screws 84. Here, the side plate 82 is arranged in the direction perpendicular to the attraction surface of the fixed iron core 2, that is, in the direction in which the shoe 6 is pushed so that the surface opposed to the movable iron core 4 of the shoe 6 becomes parallel with the fixed iron core 2. Also, on the back side, elastic elements 86 are arranged so that a load is applied in the direction in which the side plate 82 is pressed on the support plate 12 on the front side.

As shown in Figure 12, in the unexcited state, the shoe 6 is pressed on the brake surface 50, so that the shoe 6 is in a state of being parallel with the deflection of the brake surface 50.

On the other hand, as shown in Figure 13, when a current flows in the coil 16 and the movable iron core 4 is attracted to the fixed iron core 2, the pressing force toward the brake surface 50 applied to the shoe 6 is released. At this time, the shoe 6 is pressed by the side plate 82 arranged in the direction perpendicular to the attraction surface of the fixed iron core 2. As a result, the shoe 6 is attracted along the tilt of the side plate 82 while the tilt is corrected in the direction in which the opposed surface is parallel with the fixed iron core 2. Therefore, in the excited state, the shoe is arranged in the direction in which the surface opposed to the movable iron core 4 is perpendicular to the movable iron core 4 and the fixed iron core 2, that is, in the direction in which the opposed surface is parallel with the undeflected original brake surface 50.

As described above, according to the brake mechanism 150, in the unexcited state, the whole surface of the shoe 6 can be pressed on the brake surface 50 so as to match the deflection of the brake surface 50, and in the excited state, the opposed surface of the shoe 6 can be kept parallel with the undeflected original brake surface 50. Therefore, the braking force of brake can be maintained, and also the brake mechanism can be made small in size.

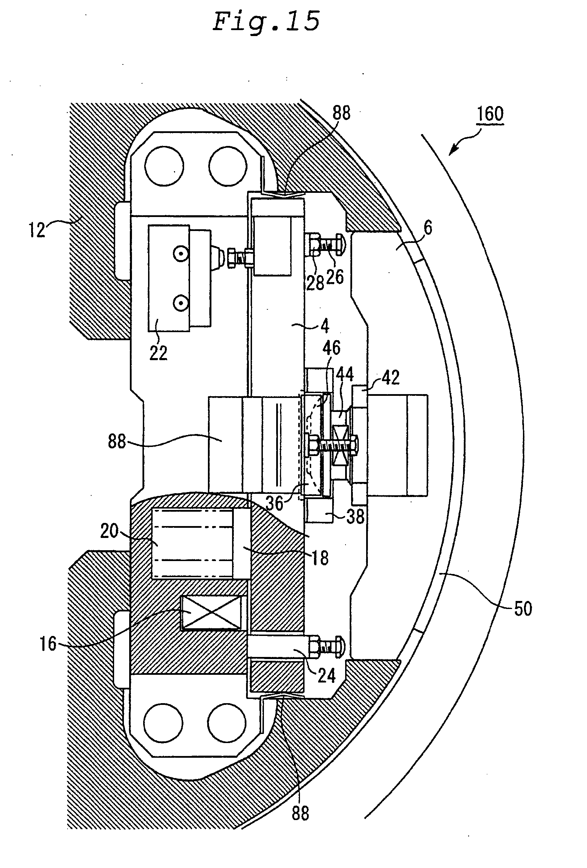

Next, a brake mechanism 160 in a sixth example will be described with reference to Figure 15.

Figure 15 is a front view, partially cross sectioned, for illustrating the brake mechanism 160. In Figure 15, hatched portions represent cross sections. Also, Figure 15 shows, like Figure 1, a right-hand side portion of the brake mechanism 160, but the actual brake mechanism 160 is symmetrical in the right-and-left direction when viewed from the front.

As shown in Figure 15, the brake mechanism 160 is similar to the brake mechanism 100 described in the first example.

However, in the brake mechanism 160, the fixed iron core 2 is not provided with the guide 14, and also the movable iron core 4 is not provided with the guide pin 32.

On the other hand, in the brake mechanism 160, the movable iron core 4 has a plate spring 88 on each of its four side surfaces. In the brake mechanism 160 as well, the brake is applied or released by attracting the movable iron core 2 to the fixed iron core 3 or pressing it toward the brake surface 50 by controlling the current flowing in the coil 16.

In the brake mechanism 100 etc. , the guide pin 32 is caused to penetrate the guide 14, and is moved in the guide 14 so that the movable iron core 4 moves horizontally with respect to the fixed iron core 2. On the other hand, in the brake mechanism 160, the movable iron core 4 is pushed from four sides in the direction perpendicular to the movement direction of the movable iron core 4 by the plate springs 88 provided on the four side surfaces, by which the movable iron core 2 can be moved while keeping the horizontality with respect to the fixed iron core 4.

As described above, the movable iron core 4 has the plate springs 88 provided on the four side surfaces, and thereby can repeat movement while keeping the horizontality with respect to the fixed iron core 2.

For example, as in the case of the brake mechanism 100, in the case where the guide pin 32 is caused to penetrate the guide 14 and is moved in the guide, if the movable iron core 4 moves in a tilted state, the guide pin 32 tilts in the guide, and thereby a reaction due to a moment load is generated in the guide. Therefore, the inside surface of the guide wears and hence the tilt of the guide pin 32 increases further, which may lead to malfunction.

On the other hand, in the brake mechanism 160, the movement direction of the movable iron core 4 is directed to a predetermined direction by supporting the movable iron core 4 from the four side surfaces. Therefore, the guide 14 can be prevented from wearing with time as compared with the case where the movement direction is directed by the guide 14 and the guide pin 32 in the center of the brake mechanism. As a result, the increase in tilt of the movable iron core 4 can be restrained.

Thus, a higher-performance brake mechanism can be obtained.

In the sixth example, explanation has been given of the case where the plate springs 88 are provided on the four side surfaces of the movable iron core. However, the present disclosure is not limited to this configuration. For example, plate springs may be provided on the four side surfaces of the shoe 6.

In the sixth example, explanation has been given of the case where the plate springs 88 are provided on the four side surfaces. However, in the present disclosure, the number of the plate springs 88 is not limited to four. The number of the plate springs 88 may be four or more or four or less if the plate springs 88 can guide the movable iron core 4 in the movement direction: for example, the plate springs 88 may be provided on the opposed two surfaces only, or two plate springs 88 may be provided on each one side surface.

Also, in the sixth example, explanation has been given of the plate springs 88 used as elements for directing the movement direction. However, the present disclosure is not limited to this configuration. For example, any other elastic body that directs the movement direction can be used.

Further, the brake mechanism 160 explained in the sixth exampleis provided with the tilt adjusting bolts 26 and the like. The present disclosure is not limited to this configuration. Any other means for adjusting the tilt as explained in the first to fifth example or the first embodiment may be used.

Other portions are the same as portions in the first to fifth embodiments, so that the explanation thereof is omitted.

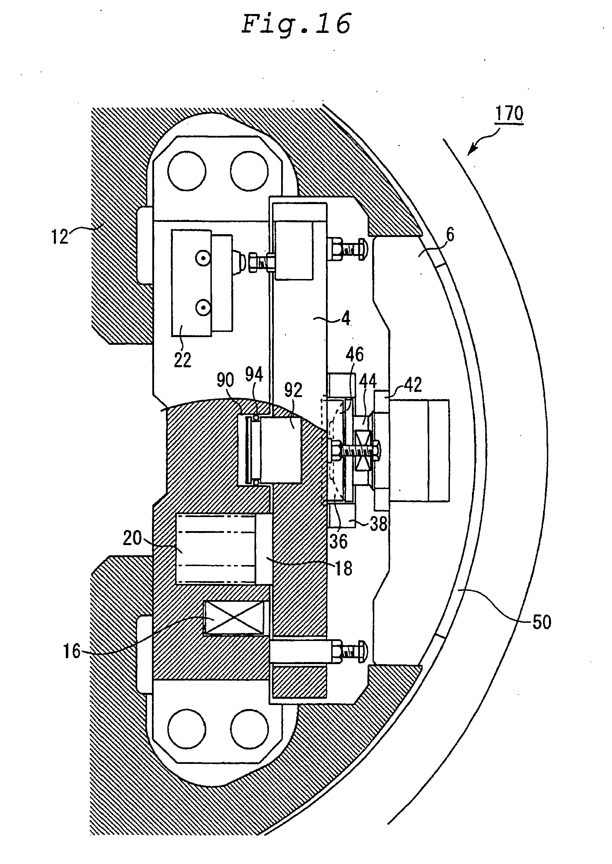

Next, a brake mechanism 170 in a seventh example will be described with reference to Figure 16.

Figure 16 is a front view, partially cross sectioned, for illustrating the brake mechanism 170 in the seventh example. In Figure 16, hatched portions represent cross sections. Also, Figure 16 shows, like Figure 1, a right-hand side portion of the brake mechanism 170, but the actual brake mechanism 170 is symmetrical in the right-and-left direction when viewed from the front.

The brake mechanism 170 is similar to the brake mechanism 100, but the brake mechanism 170 is provided with a guide 90 shorter than the guide 14 provided in the fixed iron core 2 of the brake mechanism 100. Also, the movable iron core 4 is provided with a guide pin 92 at a position corresponding to the guide 90. The guide 90 in the fixed iron core 2 is somewhat larger than the guide pin 92, so that a gap is provided therebetween. In this gap portion, an O-ring 94 is arranged. This O-ring 94 is an elastic body.

In the brake mechanism 170 as well, by controlling the current flowing in the coil 16, the movable iron core 4 is attracted to the fixed iron core 2, or the shoe 6 is pressed on the brake surface 50 by the movement of the movable iron core 4, by which the brake is applied or released.

In the brake mechanism 170, the guide 90 is somewhat larger than the guide pin 92, the guide pin 92 is fitted in the guide 90 with a gap being provided, and the O-ring, which is an elastic body, is arranged in this gap portion. Therefore, the guide pin 92 can move in the guide 90 in a state of being tilted to some extent. Even in this construction, the guide pin 92 does not come in direct contact with the inside surface of the guide 90, and the O-ring 94 comes in direct contact with the inside surface of the guide 90. Therefore, even if the guide pin 92 moves in the guide 90, the wear of the inside surface of the guide 90 can be restrained.

In this example, as in the case of the brake mechanism 100, explanation has been given of the case where the fixed iron core 2 is provided with the tilt adjusting bolts 26 and the like. However, the present disclosure is not limited to this case. For example, in the brake mechanism having other means for adjusting a tilt as in the case of the brake mechanisms 110 to 150, in place of the guide 14 and the guide pin 32, the guide 90, the guide pin 92, and the O-ring 94 may be provided as in the case of the brake mechanism 170.

Also, in this example, explanation has been given of the construction in which the O-ring is provided in the guide. However, the present disclosure is not limited to this construction. Another element such as another elastic body that is provided between the guide 90 and the guide pin 92 and can restrain the wear of the guide 90 may be used.

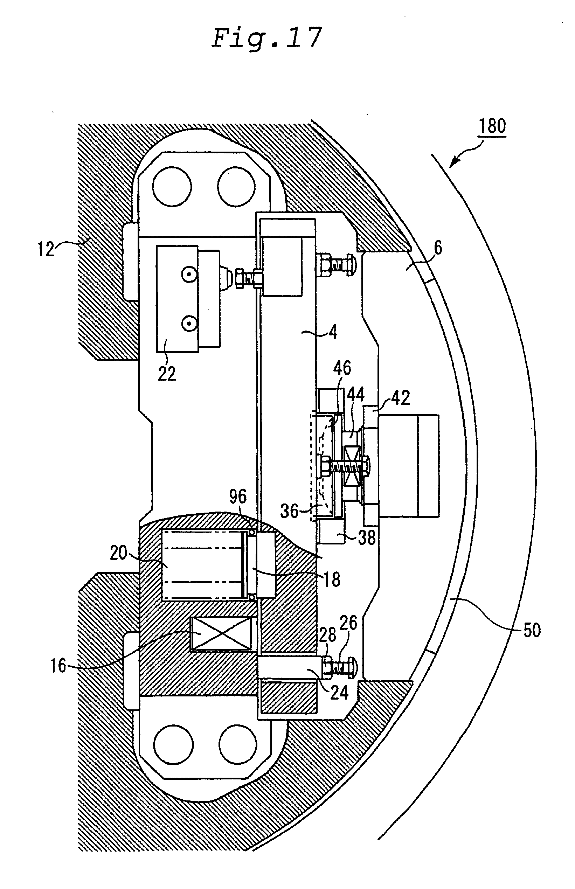

Next, a brake mechanism 180 in an eighth example will be described with reference to Figure 17.

Figure 17 is a front view, partially cross sectioned, for illustrating the brake mechanism. 180. In Figure 17, hatched portions represent cross sections. Also, Figure 17 shows, like Figure 1, a right-hand side portion of the brake mechanism 180, but the actual brake mechanism 180 is symmetrical in the right-and-left direction when viewed from the front.

As shown in Figure 17, the brake mechanism 180 is similar to the brake mechanism 170 in the seventh example. However, the brake mechanism 180 is not provided with the guide 90 and the guide pin 92. On the other hand, in the brake mechanism 180, the spring receiving member 18 for the pressing spring 20, which is provided at two locations in the fixed iron core 2, is provided with an O-ring 96. The O-ring 96 is arranged so that a load is applied in the direction perpendicular to the load direction of attraction force. Also, a part of the spring receiving member 18 is embedded in the movable iron core 4.

In the brake mechanism 180 as well, by controlling the current flowing in the coil 16, the movable iron core 4 is attracted to the fixed iron core 2, or the shoe 6 is pressed on the brake surface 50 by the force of the pressing spring 20 pushing the movable iron core 4, by which the brake is applied or released.

At this time, a part of the spring receiving member 18 provided in the fixed iron core 2 of the brake mechanism 180 is fixed to the movable iron core 4. Also, the O-ring 96 is provided around the spring receiving member 18, by which a load is applied in the direction perpendicular to the movement direction of the movable iron core 4. Therefore, the movable iron core 4 is guided by the movement of the spring receiving member 18 supported by the O-ring, and thus is attracted to the fixed iron core 2 or is pressed toward the shoe 6.

Thus, according to the brake mechanism 180, the movement of the movable iron core 4 can be guided by the spring receiving member 18 and the O-ring 96 provided at two locations of the fixed iron core. Therefore, the movable iron core 4 can be moved without a problem in that the movable iron core 4 is tilted by the wear of the guide.

In the eighth example as well, as in the case of the brake mechanism 100, explanation has been given of the case where the fixed iron core 2 is provided with the tilt adjusting bolts 26 and the like. However, the present disclosure is not limited to this case. For example, in the brake mechanism having other means for adjusting the tilt as in the case of the brake mechanisms 110 to 160, in place of the guide 14 and the guide pin 32, a part of the spring receiving member 18 may be fixed in the movable iron core 4, and the O-ring 96 may be provided as in the case of the brake mechanism 180.

Also, in the eighth example, explanation has been given of the construction in which the O-ring 96 is provided on the spring receiving member 18. However, the present disclosure is not limited to this construction. Another element such as another elastic body that moves the movable iron core 4 in an untilted state and can restrain the wear may be used.

Other portions are the same as portions in the first to seventh examples or the first embodiment, so that the explanation thereof is omitted.

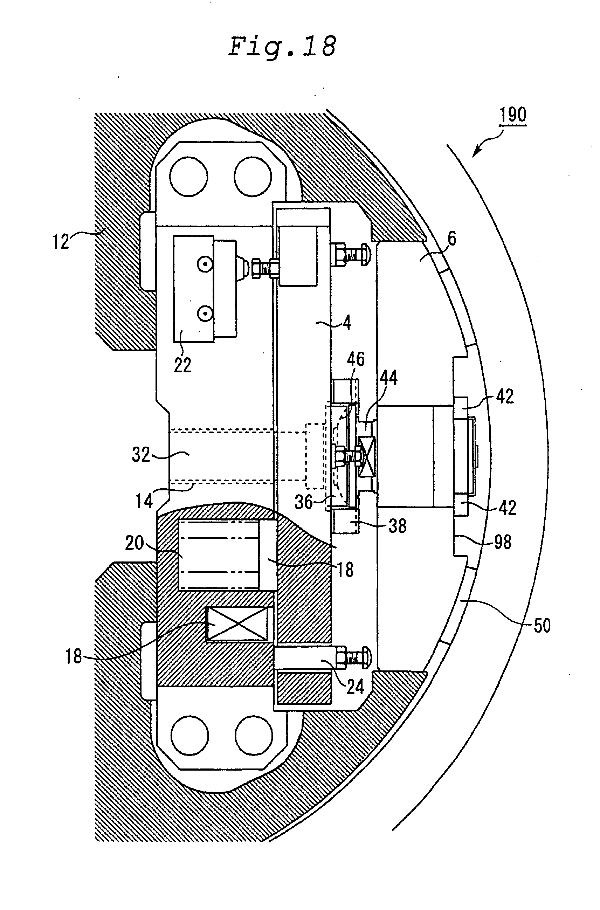

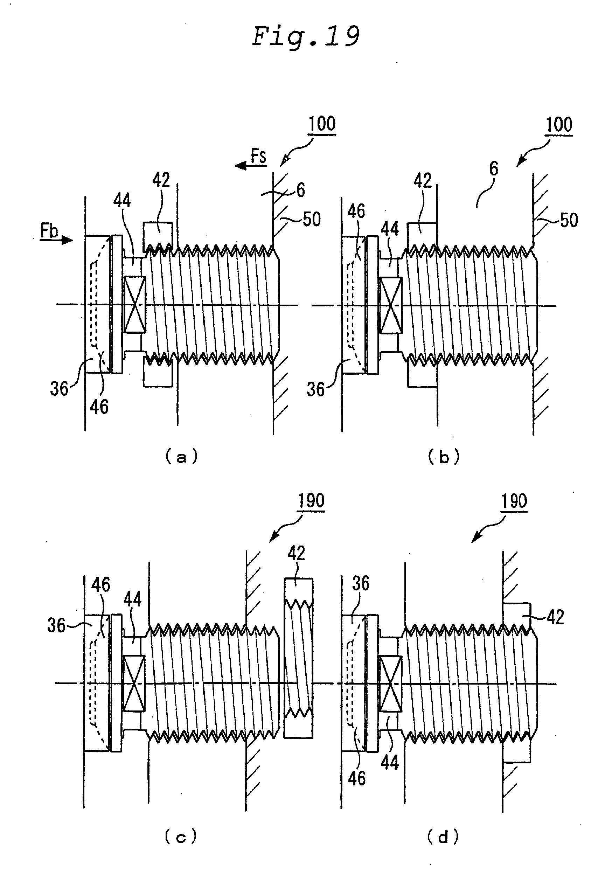

Next, a brake mechanism 190 in a ninth example will be described with reference to Figures 18 and 19.

Figure 18 is a front view, partially cross sectioned, for illustrating the brake mechanism 190. In Figure 18, hatched portions represent cross sections. Also, Figure 18 shows, like Figure 1, a right-hand side portion of the brake mechanism 190, but the actual brake mechanism 190 is symmetrical in the right-and-left direction when viewed from the front.

The brake mechanism 190 is similar to the brake mechanism 100. However, in the brake mechanism 190, a cut-off groove 98 is provided on the brake surface 50 side of the shoe 6. In the cut-off groove 98, the locknut 42 for the gap adjusting bolt 44 is arranged.

Figure 19 is an enlarged sectional view of the gap adjusting bolt 44. Figures 19(a) and 19(b) show a case where the gap adjusting bolt 44 is provided on the movable iron core 4 side of the shoe, and Figures 19(c) and 19(d) show a case where the gap adjusting bolt 44 is provided on the brake surface 50 side of the shoe 6.

As shown in Figures 19(a) to 19(d), usually, a small gap exists between the threaded portion of the gap adjusting bolt 44 and the threaded portion of the shoe 6.

As shown in Figures 19(a) and 19(b), the shoe 6 receives a reaction Fs from the brake surface with respect to a pressing force Fb of the pressing spring 20. At this time, the threaded portion of the shoe 6 receives a force in the same direction as that of Fs (left direction in Figure 19) with respect to the threaded portion of the gap adjusting bolt 44. On the other hand, when the gap adjusting bolt 44 is locked by the locknut 42, an axial force is generated in the threaded portion of the gap adjusting bolt 44, so that the thread face of the locknut 42 receives a force in the same direction as that of Fs (left direction in Figure 19) with respect to the thread face of the gap adjusting bolt 44. Also, the thread face of the shoe 6 receives a force in the same direction as that of Fb (right direction in Figure 19) with respect to the thread face of the gap adjusting bolt 44. Therefore, the shoe stroke measured before the gap adjusting bolt 44 is locked by the locknut 42 moves to the left side so as to correspond to the reaction, by which g1 is shortened by a distance of the small gap.

On the other hand, as shown in Figures 19(c) and 19(d), the threaded portion of the shoe 6 works in the direction of Fs with respect to the threaded portion of the gap adjusting bolt 44. On the other hand, when the gap adjusting bolt 44 is locked by the locknut 42, an axial force is generated in the bolt threaded portion, so that the threaded portion of the locknut 42 works in the right direction with respect to the thread face of the gap adjusting bolt 44, and also the thread face of the shoe 6 works in the left direction with respect to the gap adjusting bolt 44. Thereupon, since the force received by the thread face of the gap adjusting bolt 44 does not reverse, the shoe 6 does not move by an amount of backlash. Therefore, the gap need not be set again.

Thereupon, since the gap g1 between the attraction surfaces can be set so as to be small, the system can be made small in size, and also a low-noise brake can be obtained.

Also, in the brake mechanism 190, the cut-off groove 98 is provided in the central portion of the shoe 6 that faces to the brake surface. When the cut-off groove 98 is provided in this manner, the friction coefficient is increased by the wedge effect. For example, if a groove angle of 30 degrees is provided with respect to the extension angle of 60 degrees, the apparent friction coefficient increases by 8%.

Therefore, the brake mechanism can further be made small in size, so that a space-saving and low-cost brake system can be obtained.

A fixed member, a movable member, and a braking member in the present invention correspond to, for example, the fixed iron core 2, the movable iron core 4, and the shoe 6 in the examples and the embodiment of the present invention, respectively. An elastic member in the present invention corresponds to the pressing spring 20 in the examples and the embodiment of the present invention. Also, a connecting portion in the present invention indicates the connecting portion between the movable iron core 4 and the shoe 6 in the examples and the embodiment of the present invention, and a brake surface side adjusting member corresponds to, for example, the gap adjusting bolt 44, the spherical seat 46, the spherical seat receiving member 36, and the plate spring 38, or the gap adjusting bolt 62, the spherical seat 64, the spherical seat receiving member 56, the plate spring 58, and the like in the examples and the embodiment of the present invention.

An elastic member for side plate in the present invention corresponds to the elastic element 86 in the first example.

### Industrial Application

As described above, according to the present invention, the tilt of connection between the braking member and the movable member can be adjusted in the connecting portion between the moveable member and the braking member. Therefore, even when the brake surface deflects, at the time of brake release, the braking member and the brake surface can be adjusted so as to be parallel with each other, so that the shoe is prevented from coming into contact with the brake surface. Thereby, the occurrence of wear between the shoe and the brake surface can be restrained, and thus the braking force of the brake mechanism can be maintained.

According to an option, also falling under the invention, for the brake mechanism in which when the fixed member and the movable member are attracted to each other, the distance between the fixed member or the movable member and the braking member can be adjusted, in the attracted state, the braking member and the undeflected original brake surface can be kept parallel with each other. Therefore, the distance between the brake surface and the braking member and the distance between the attraction surfaces of the movable iron core and the fixed iron core can be shortened to some degree. As a result, a high attraction force is not needed, and the brake mechanism can be made small in size.

Also, in the present invention, for the brake mechanism provided with a mechanism in which when the movable iron core moves, the movement direction of the movable iron core is directed, the movement direction of the movable member can be directed to a proper direction, so that a shift caused by the movement of the movable member and the braking member can be restrained. Therefore, the brake mechanism can be made small in size.

## Claims

1. A brake mechanism ( 150) for a traction machine, comprising:
a fixed member (2);
a movable member (4) facing to said fixed member (2); and
a braking member (6) which connects with said movable member (4) on one surface, and faces to a brake surface (50) provided in a rotating portion of the traction machine on the surface opposite to said one surface, wherein
said fixed member (2) comprises:
an elastic member (20) which presses said movable member (4) toward said brake surface (50) together with said braking member (6); and
a coil (16) for attracting said movable member (4) to said fixed member (2) together with said braking member (6) by causing a current to flow, and
a connecting portion between said movable member (4) and said braking member (6) comprises a brake surface side adjusting member (44, 46) for adjusting the tilt of said braking member (6), wherein,
said brake mechanism for a traction machine further comprises
a side plate (82) which is provided so as to come into contact with one surface of said braking member (6) and to be capable of adjusting the said tilt; and
an elastic member (86) for side plate, which is in contact with a surface opposed to said one surface and presses said braking member (6) toward said side plate (82), and
said braking member (6) moves along said side plate (82) when said movable member (4) is attracted to said fixed member (2),
characterize in that
the side plate (82) is fixed, with adjusting screws (84), to a support plate (12) arranged so as to face to the braking member (6),
the elastic member (86) being arranged so that a load is applied in the direction in which the side plate (82) is pressed on the support plate (12).

2. The brake mechanism for a traction machine according to claim 1, wherein,
said brake surface side adjusting member'(44, 46) comprises:
a body portion (44) whose tip end is formed into a spherical surface;
a spherical seat receiving member (36) which is in contact with said spherical surface; and
a support member (38), which is arranged around said spherical seat receiving member (36), for supporting said body portion (44) in a state in which said body portion (44) can move slightly on said spherical seat receiving member (36), and
the tilt of said braking member (6) is adjusted by sliding said spherical surface on said spherical seat receiving member (36).

3. The brake mechanism for a traction machine according to claim 2, wherein,
said body portion (44) is connected to said braking member (6), and
said spherical seat receiving member (36) and said support member (38) are connected to said movable member (4).

4. The brake mechanism for a traction machine according to claim 3, wherein,
said braking member (6) comprises a concave portion (98) in a surface facing to said brake surface (50),
said body portion (44) comprises a screw portion penetrating said braking member (6) and a nut portion (42) engaging with said screw portion, and
said screw portion is fixed by said nut portion (42) arranged in said concave portion (98).

5. The brake mechanism for a traction machine according to claim 2, wherein,
said body portion (62) is connected to said movable member (4), and
said spherical seat receiving member and said support member are connected to said braking member (6).

6. The brake mechanism for a traction machine according to any one of claims 1 to 5, wherein,
said fixed member (2) comprises a through hole (14) in the center thereof,
said movable member (4) comprises an axis (32) in the center thereof,
said axis (32) penetrates said through hole (14), and said axis (32) moves in said through hole (14) when said movable member (4) moves toward said fixed member (2) or toward said brake surface (50).

7. The brake mechanism for a traction machine according to any one of claims 1 to 6, wherein,
said fixed member (2) comprises an engagement hole (90) having a bottom portion in the center thereof,
said movable member (4) comprises an engagement element (92) which engages with said engagement portion (90),
said engagement element (92) has an elastic member (94) for engagement hole (90), which is arranged in a gap provided between said engagement hole (90) and said engagement element (92), and
said engagement element (92) moves in said engagement hole (90) when said movable member (4) moves toward said fixed member (2) or toward said brake surface (50).

8. The brake mechanism for a traction machine according to any one of claims 1 to 5, wherein,
said fixed member (2) comprises an elastic member receiving member (18) provided at a position opposed to said elastic member (20),
a part of said elastic member receiving member (18) is connected to said movable member (4),
an elastic member (96) for elastic member receiving member is provided around said elastic member receiving member (18), and
said elastic member receiving member (18) moves together with said movable member (4) when said movable member (4) moves toward said fixed member (2) or toward said brake surface (50).

9. The brake mechanism for a traction machine according to any one of claims 1 to 5, wherein said brake mechanism for a traction machine further comprises an elastic member for movable member (88), which is provided at a position opposed to said movable member (4), for applying a load in the central direction of said movable member (4) and in the direction perpendicular to the movement direction of said movable member (4).

## Patentansprüche

1. Bremsmechanismus (150) für eine Zugmaschine, mit:
einem ortsfesten Element (2);
einem beweglichen Element (4), das dem ortsfesten Element (2) zugewandt ist; und
einem Bremselement (6), das an einer Fläche mit dem beweglichen Element (4) in Verbindung steht, und einer Bremsfläche (50), die in einem drehenden Abschnitt der Zugsmaschine an der Fläche gegenüber der einen Fläche vorgesehen ist, zugewandt ist, wobei
das ortsfeste Element (2) aufweist:
ein elastisches Element (20), welches das bewegliche Element (4) zusammen mit dem Bremselement (6) zu der Bremsfläche (50) hin drückt; und
eine Spule (16) zum Anziehen des beweglichen Elements (4) zusammen mit dem Bremselement (6) zu dem ortsfesten Element (2), indem bewirkt wird, dass ein Strom fließt, und wobei
ein Verbindungsabschnitt zwischen dem beweglichen Element (4) und dem Bremselement (6) ein bremsflächenseitiges Einstellelement (44, 46) zum Einstellen der Neigung des Bremselements (6) aufweist,
wobei der Bremsmechanismus für eine Zugmaschine ferner aufweist
eine Seitenplatte (82), die derart vorgesehen ist, dass sie in Kontakt mit einer Fläche des Brennelements (6) kommt und, dass sie in der Lage ist die Neigung einzustellen; und
ein elastisches Element (86) für die Seitenplatte, das in Kontakt mit einer Fläche ist, die der einen Fläche gegenüberliegt und das Bremselement (6) zu der Seitenplatte (82) in drückt, und wobei
sich das Bremselement (6) entlang der Seitenplatte (82) bewegt, wenn das bewegliche Element (4) an das ortsfeste Element (2) gezogen wird,
**dadurch gekennzeichnet, dass**
die Seitenplatte (82) mit Einstellschrauben (84) an einer Halteplatte (12) befestigt ist, die derart angeordnet ist, dass sie dem Bremselement (6) zugewandt ist,
das elastische Element (86) so angeordnet ist, dass eine Last in der Richtung in der die Seitenplatte (82) auf die Halteplatte (12) gedrückt wird, aufgebracht wird.

2. Bremsmechanismus für eine Zugmaschine gemäß Anspruch 1, wobei
das bremsflächenseitige Einstellelement (44, 46) aufweist:
einen Körperabschnitt (44) dessen Vorderende als kugelförmige Fläche ausgebildet ist;
ein kugelförmiges Sitzaufnahmeelement (36) das in Kontakt mit der kugelförmigen Fläche steht; und
ein Haltelement (38), das zum Halten des Körperabschnitts (44) in einem Zustand in dem sich der Körperabschnitt (44) geringfügig auf dem Sitzaufnahmeelement (36) bewegen kann, um das kugelförmige Sitzaufnahmeelement (36) angeordnet ist, und
die Neigung des Bremselements (6) durch Verschieben der kugelförmigen Fläche auf dem kugelförmigen Sitzaufnahmeelement (36) einstellt wird.

3. Bremsmechanismus für eine Zugmaschine gemäß Anspruch 2, wobei
der Körperabschnitt (44) mit dem Bremselement (6) verbunden ist, und
das kugelförmige Sitzaufnahmeelement (36) und das Halteelement (38) mit dem beweglichen Element (4) verbunden sind.

4. Bremsmechanismus für eine Zugmaschine nach Anspruch 3, wobei
das Bremselement (6) einen konkaven Abschnitt (98) in einer Fläche, die der Bremsfläche (50) zugewandt ist, aufweist,
der Körperabschnitt (44) einen Schraubenabschnitt, der das Bremselement (6) durchdringt und einen Mutterabschnitt (42), der mit dem Schraubenabschnitt eingreift, aufweist, und
der Schraubenabschnitt durch den Mutterabschnitt (42), der in dem konkaven Abschnitt (98) angeordnet ist, befestigt ist.

5. Bremsmechanismus für eine Zugmaschine gemäß Anspruch 2, wobei
der Körperabschnitt (62) mit dem beweglichen Element (4) verbunden ist, und
das kugelförmige Sitzaufnahmeelement und das Halteelement mit dem Bremselement (6) verbunden sind.

6. Bremsmechanismus für eine Zugmaschine nach einem der Ansprüche 1 bis 5, wobei
das ortsfeste Element (2) eine Durchgangsöffnung (14) in dessen Zentrum aufweist,
das bewegliche Element (4) eine Achse (32) in dessen Zentrum aufweist,
die Achse (32) das Durchgangsloch (14) durchdringt, und
sich die Achse (32) in die Durchgangsöffnung (14) bewegt, wenn sich das bewegliche Element (4) zu dem ortsfesten Element (2) hin oder zu der Bremsfläche (50) hin bewegt.

7. Bremsmechanismus für eine Zugmaschine nach einem der Ansprüche 1 bis 6, wobei
das ortsfeste Element (2) eine Eingriffsöffnung (90) mit einem Bodenabschnitt in dessen Zentrum aufweist,
das bewegliche Element (4) ein Eingriffselement (92), das mit dem Eingriffsabschnitt (90) eingreift, aufweist,
das Eingriffselement (92) ein elastisches Element (94) für die Eingriffsöffnung (90) aufweist, das in einem Spalt, der zwischen der Eingriffsöffnung (90) und dem Eingriffselement (92) vorgesehen ist, angeordnet ist und
sich das Eingriffselement (92) in der Eingriffsöffnung (90) bewegt, wenn sich das bewegliche Element (4) zu dem ortsfesten Element (2) hin oder zu der Bremsfläche (50) hin bewegt.

8. Bremsmechanismus für eine Zugmaschine nach einem der Ansprüche 1 bis 5, wobei
das ortsfeste Element (2) ein Aufnahmeelement für das elastische Element (18) aufweist, das in einer Position gegenüber dem elastischen Element (20) vorgesehen ist,
ein Teil des Aufnahmeelements für das elastische Element (18) mit dem beweglichen Element (4) verbunden ist,
ein elastisches Element (96) für das Aufnahmeelement für das elastische Element um das Aufnahmeelement für das elastische Element (18) herum, vorgesehen ist, und
sich das Aufnahmeelement für das elastische Element (18) zusammen mit dem beweglichen Element (4) bewegt, wenn sich das bewegliche Element (4) zu dem ortsfesten Element (2) hin oder zu der Bremsfläche (50) hin bewegt.

9. Bremsmechanismus für eine Zugmaschine nach einem der Ansprüche 1 bis 5, wobei der Bremsmechanismus für eine Zugmaschine ferner ein elastisches Element für ein bewegliches Element (88) aufweist, das an einer gegenüberliegenden Position zu dem beweglichen Element (4), zum Aufbringen einer Last in der zentralen Richtung des beweglichen Elements (4) und in der Richtung senkrecht zu der Bewegungsrichtung des beweglichen Elements (4), vorgesehen ist.

## Revendications

1. Mécanisme de frein (150) pour une machine de traction, comprenant :
un élément fixe (2) ;
un élément mobile (4) faisant face audit élément fixe (2) ; et
un élément de freinage (6) qui, sur une surface, relie audit élément mobile (4) et, sur la surface située à l'opposé de ladite surface, fait face à une surface de frein (50) prévue dans une partie rotative de la machine de traction, mécanisme de frein dans lequel
ledit élément fixe (2) comprend :
un élément élastique (20) qui presse ledit élément mobile (4) vers ladite surface de frein (50), en même temps que ledit élément de freinage (6) ; et
une bobine (16) pour attirer ledit élément mobile (4) sur ledit élément fixe (2), en même temps que ledit élément de freinage (6), en faisant passer un courant, et
une partie de liaison entre ledit élément mobile (4) et ledit élément de freinage (6) comprend un élément de réglage placé du côté de la surface de frein (44, 46), pour régler l'inclinaison dudit élément de freinage (6),
où ledit mécanisme de frein pour une machine de traction comprend en outre
une plaque latérale (82) qui est prévue pour venir au contact d'une surface dudit élément de freinage (6) et pour être en mesure de régler ladite inclinaison ;
et
un élément élastique (86) pour une plaque latérale qui est au contact d'une surface opposée à ladite autre surface et presse ledit élément de freinage (6) vers ladite plaque latérale (82), et
ledit élément de freinage (6) se déplace le long de ladite plaque latérale (82) quand ledit élément mobile (4) est attiré sur ledit élément fixe (2),
**caractérisé en ce que**
la plaque latérale (82) est fixée, avec des vis de réglage (84), sur une plaque support (12) agencée de façon à être en face de l'élément de freinage (6),
l'élément élastique (86) étant agencé de manière telle, qu'une charge soit appliquée dans la direction dans laquelle la plaque latérale (82) est pressée sur la plaque support (12).

2. Mécanisme de frein pour une machine de traction selon la revendication 1, dans lequel
ledit élément de réglage placé du côté de la surface de frein (44, 46) comprend :
une partie (44) formant le corps dont l'extrémité d'embout est formée dans une surface sphérique ;
un élément (36) logeant le siège sphérique, élément qui est en contact avec ladite surface sphérique ; et
un élément support (38) qui est agencé autour dudit élément (36) logeant le siège sphérique, pour supporter ladite partie (44) formant le corps, dans un état dans lequel ladite partie (44) formant le corps peut se déplacer légèrement sur ledit élément (36) logeant le siège sphérique, et
l'inclinaison dudit élément de freinage (6) est réglée en faisant coulisser ladite surface sphérique sur ledit élément (36) logeant le siège sphérique.

3. Mécanisme de frein pour une machine de traction selon la revendication 2, dans lequel
ladite partie (44) formant le corps est reliée audit élément de freinage (6), et
ledit élément (36) logeant le siège sphérique et ledit élément support (38) sont reliés audit élément mobile (4).

4. Mécanisme de frein pour une machine de traction selon la revendication 3, dans lequel
ledit élément de freinage (6) comprend une partie concave (98) dans une surface faisant face à ladite surface de frein (50),
ladite partie (44) formant le corps comprend une partie formant une vis pénétrant dans ledit élément de freinage (6) et une partie (42) formant un écrou s'engageant dans ladite partie formant la vis, et ladite partie formant la vis est fixée par ladite partie (42) formant l'écrou et agencée dans ladite partie concave (98).

5. Mécanisme de frein pour une machine de traction selon la revendication 2, dans lequel
ladite partie (62) formant le corps est reliée audit élément mobile (4), et
ledit élément logeant le siège sphérique et ledit élément support sont reliés audit élément de freinage (6).

6. Mécanisme de frein pour une machine de traction selon l'une quelconque des revendications 1 à 5, dans lequel
ledit élément fixe (2) comprend un trou traversant (14) situé au centre dudit élément fixe, ledit élément mobile (4) comprend un axe (32) situé au centre dudit élément mobile,
ledit axe (32) pénètre dans ledit trou traversant (14), et
ledit axe (32) se déplace dans ledit trou traversant (14) quand ledit élément mobile (4) se déplace vers ledit, élément fixe (2) ou bien vers ladite surface de frein (50).

7. Mécanisme de frein pour une machine de traction selon l'une quelconque des revendications 1 à 6, dans lequel
ledit élément fixe (2) comprend un trou d'engagement (90) ayant une partie inférieure située au centre dudit élément fixe,
ledit élément mobile (4) comprend un élément d'engagement (92) qui s'engage dans ladite partie d'engagement (90),
ledit élément d'engagement (92) a un élément élastique (94) pour le trou d'engagement (90), élément élastique qui est agencé dans un intervalle prévu entre ledit trou d'engagement (90) et ledit élément d'engagement (92), et
ledit élément d'engagement (92) se déplace dans ledit trou d'engagement (90) quand ledit élément mobile (4) se déplace vers ledit élément fixe (2) ou bien vers ladite surface de frein (50).

8. Mécanisme de frein pour une machine de traction selon l'une quelconque des revendications 1 à 5, dans lequel
ledit élément fixe (2) comprend un élément (18) logeant un élément élastique et prévu au niveau d'une position située à l'opposé dudit élément élastique (20),
une partie dudit élément (18) logeant l'élément élastique est reliée audit élément mobile (4),
un élément élastique (96) pour un élément logeant l'élément élastique est prévu autour dudit élément (18) logeant l'élément élastique, et
ledit élément (18) logeant l'élément élastique se déplace en même temps que ledit élément mobile (4) quand ledit élément mobile (4) se déplace vers ledit élément fixe (2) ou bien vers ladite surface de frein (50).

9. Mécanisme de frein pour une machine de traction selon l'une quelconque des revendications 1 à 5, où ledit mécanisme de frein pour une machine de traction comprend en outre un élément élastique pour un élément mobile (88), élément élastique qui est prévu au niveau d'une position située à l'opposé dudit élément mobile (4), pour appliquer une charge dans la direction centrale dudit élément mobile (4) et dans la direction perpendiculaire à la direction de mouvement dudit élément mobile (4).
